# EUROPEAN PATENT SPECIFICATION

(11) **EP 3 604 566 B1**
(45) Date of publication and mention of the grant of the patent: **15.11.2023**
(21) Application number: 18772512.2
(22) Date of filing: 20.03.2018
(51) Int. Cl.: C21D 9/04, C21D 6/00, C21D 8/00, C22C 38/00, C22C 38/18, C22C 38/02, C22C 38/04, C22C 38/06, C22C 38/22, C22C 38/24, C22C 38/26, C22C 38/28, C22C 38/32, C22C 38/40, C22C 38/54, E01B 5/02, G01M 5/00

(54) **RAIL AND METHOD FOR PRODUCING SAME**
SCHIENE UND VERFAHREN ZUR HERSTELLUNG DAVON
RAIL, ET PROCÉDÉ DE FABRICATION DE CELUI-CI

(30) Priority: 21.03.2017 JP 2017054992
(43) Date of publication of application: 05.02.2020
(73) Proprietor: JFE Steel Corporation, Tokyo 100-0011 (JP)
(72) Inventor: HONJO, Minoru, Tokyo 100-0011 (JP); KIMURA, Tatsumi, Tokyo 100-0011 (JP); ICHIMIYA, Katsuyuki, Tokyo 100-0011 (JP); HASE, Kazukuni, Tokyo 100-0011 (JP)
(74) Representative: Grünecker Patent- und Rechtsanwälte PartG mbB
(86) International application number: PCT/JP2018/011193
(87) International publication number: WO 2018/174095

(56) References cited:
- WO-A1-2014/157252
- WO-A1-2016/181891
- JP-A- H06 312 217
- JP-A- H07 185 659
- JP-A- H07 185 660
- JP-A- H07 185 660
- JP-A- 2002 069 901
- US-A1- 2010 186 857
- US-A1- 2016 083 820
- US-A1- 2016 194 729
- US-A1- 2017 044 721
- BETEGON BIEMPICA C ET AL: "Nonlinear analysis of residual stresses in a rail manufacturing process by FEM", APPLIED MATHEMATICAL MODELLING, GUILDFORD, GB, vol. 33, no. 1, 1 January 2009 (2009-01-01), pages 34-53, XP025433188, ISSN: 0307-904X, DOI: 10.1016/J.APM.2007.10.015 [retrieved on 2007-10-25]
- JI YU ET AL: "Aging performance of U75V rail Aging performance of U75V rail", GANGTIE - IRON AND STEEL, YENIN GONGYE CHUBANSHE, BEIJING, CN, vol. 46, no. 2, 1 February 2011 (2011-02-01), pages 58-61, XP009524954, ISSN: 0449-749X
- AUGUSTA MARTINELLI MIRANDA ET AL: "Monitoring of less-common residual elements in scrap feeds for EAF steelmaking", IRONMAKING & STEELMAKING: PROCESSES, PRODUCTS AND APPLICATIONS, vol. 46, no. 7, 9 August 2019 (2019-08-09) , pages 598-608, XP055752627, United Kingdom ISSN: 0301-9233, DOI: 10.1080/03019233.2019.1601851

## Description

### TECHNICAL FIELD

The invention relates to a rail, particularly a high-strength pearlitic rail, and to a method for producing the same. Specifically, because this kind of rail is used under severe high axle load conditions such as in mining railways which are weighted with heavy freight cars and often have steep curves, the invention provides a method for providing a high-strength pearlitic rail having excellent rolling contact fatigue resistance which is suitable for prolonging the rail service life.

### BACKGROUND

In heavy haul railways mainly built to transport ore, the load applied to the axle of a freight car is much higher than that in passenger cars, and rails and wheels are used in increasingly harsh environments. For such a rail used in heavy haul railways, specifically, in railways on which trains and freight cars run with high loading weight, steel having a pearlite structure is conventionally primarily used, from the viewpoint of the importance of rolling contact fatigue resistance. In recent years, however, to increase loading weight on freight cars and improve the efficiency of transportation, there has been demand for further improvement of rolling contact fatigue resistance of rails.

Consequently, there have been made various studies for further improvement of rolling contact fatigue resistance. For example, JP 5292875 B (PTL 1) proposes a rail having excellent wear resistance, rolling contact fatigue resistance, and delayed fracture resistance, the rail having defined ratios of the Mn content and the Cr content, and of the V content and the N content. JP 5493950 B (PTL 2) proposes a method for producing a pearlitic rail having excellent wear resistance and ductility, in which the pearlitic rail has defined contents of C and Cu and is subjected to post heat treatment at heating temperature of 450 °C to 550 °C for 0.5 h to 24 h. JP 2000-219939 A (PTL 3) proposes a pearlitic rail having excellent wear resistance and surface damage resistance, the pearlitic rail having a defined C content and structure and further having a 0.2 % proof stress of 600 MPa to 1200 MPa. JP 5453624 B (PTL 4) proposes a pearlite steel rail having a 0.2 % proof stress of more than 500 MPa and less than 800 MPa, the pearlite steel rail having defined contents of C, Si, Mn, P, S, and Cr, and a defined sum of contents of C, Si, Mn, and Cr. US2016083820 A1 discloses a pearlitic rail and a method of manufacturing a pearlitic rail. Ji Yu et al. "Aging performance of U75V rail Aging performance of U75V rail", GANGTIE - IRON AND • STEEL 46 (2) (2011) p.58-61 (ISSN 0449-749X) discloses effect of temperature and time on the performance and chemical composition fluctuation studied with natural and artificial aging method of U75V rail.

### CITATION LIST

### Patent Literature

PTL 1: JP 5292875 B
PTL 2: JP 5493950 B
PTL 3: JP 2000-219939 A
PTL 4: JP 5453624 B

### SUMMARY

### (Technical Problem)

A rail obtained through hot rolling and accelerated cooling is typically subjected to straightening treatment to eliminate a bend of the rail. In this straightening treatment, the 0.2 % proof stress is significantly decreased by the Bauschinger effect. Specifically, to impart straightness to a rail, for example, the rail has to be straightened with a load of 294200 N to 686466 N (30 tf to 70 tf). When straightening treatment is performed with such a high load, the 0.2 % proof stress after the straightening treatment is significantly decreased as compared with before the treatment.

Then, alloying elements need to be added to sufficiently enhance the 0.2 % proof stress before straightening treatment of a rail, but adding a large amount of alloying elements rather causes an abnormal structure other than a pearlite structure. Thus, adding more alloying elements than the present level is difficult. Therefore, a decrease in the 0.2 % proof stress caused by the Bauschinger effect needs to be prevented by a method other than the addition of alloying elements.

All the techniques described in PTL 1 to PTL 4, however, merely improve the 0.2 % proof stress in a stage before a rail is subjected to straightening treatment. Any of the techniques cannot avoid a decrease in the 0.2 % proof stress after straightening treatment.

Specifically, the technique described in PTL 1 defines a ratio of the Mn content and the Cr content, and a ratio of the V content and the N content, but the rail loses the 0.2 % proof stress in straightening treatment as described above. Thus, the 0.2 % proof stress cannot be sufficiently maintained after straightening treatment only by defining the ratio of alloying elements.

PTL 2 proposes to define contents of C and Cu and to perform post heat treatment at heating temperature of 450 °C to 550 °C for 0.5 h to 24 h, but the heating temperature is high only to decrease the 0.2 % proof stress because of recovery of dislocation. Thus, the 0.2 % proof stress is more decreased after straightening treatment.

The technique described in PTL 3 sets the C content to more than 0.85 % and increases the amount of cementite, thus ensuring a high 0.2 % proof stress. On the other hand, a decrease in elongation tends to cause cracking, thus making it difficult to ensure rolling contact fatigue resistance.

The pearlite steel rail of PTL 4 has a 0.2 % proof stress as low as less than 800 MPa, and actually has difficulties to ensure rolling contact fatigue resistance.

The invention has been developed in light of the above circumstances. It could be helpful to provide a method for achieving a high 0.2 % proof stress in a rail after shipping, which is effective at improving rolling contact fatigue resistance of the rail.

### (Solution to Problem)

We studied to address this issue, and found that optimizing the chemical composition of a rail, and additionally, properly performing straightening treatment before natural aging is effective to improve the 0.2 % proof stress of a pearlitic rail. In particular, rails used in heavy haul railways in mines have a long transport period from the shipping to the laying on foreign and domestic mining sites. Thus, based on the findings that using the period for natural aging is advantageous, we completed the invention.

The invention disclosure is based on the findings described above and has the following primary features.

A rail according to the invention is defined in the independent product claim 1. A method for producing a rail is defined in the independent method claim 2.

### (Advantageous Effect)

According to the invention, it is possible to provide a high-strength pearlitic rail which obtains an excellent 0.2 % proof stress by aging and thus can be suitably used in heavy haul railways.

### BRIEF DESCRIPTION OF THE DRAWINGS

In the accompanying drawings:
FIG. 1 is a schematic diagram of a rail head illustrating a collecting position of a tensile test piece;
FIGS. 2A and 2B are each a schematic diagram of a rail head illustrating a collecting position of a rolling contact fatigue test piece; and
FIG. 3 is a schematic diagram illustrating an overview of bend straightening of a rail.

### DETAILED DESCRIPTION

### [Chemical Composition]

Our rail will be specifically explained below. It is important that our rail has the chemical composition described above. The reasons for limiting the chemical composition as described above are explained first. The unit of the content of each component is "mass%", but it is abbreviated as "%".

### C: 0.70 % to 0.85 %

C is an element that forms cementite in a pearlite structure and has the effect of improving the 0.2 % proof stress by natural aging. Therefore, the addition of C is necessary to ensure the 0.2 % proof stress in a rail. As the C content increases, the 0.2 % proof stress is improved. Specifically, when the C content is less than 0.70 %, it is difficult to obtain an excellent 0.2 % proof stress after natural aging. On the other hand, when the C content is beyond 0.85 %, pro-eutectoid cementite is formed at prior austenite grain boundaries, ending up deteriorating rolling contact fatigue resistance of a rail. Therefore, the C content is set to 0.70 % to 0.85 %, and preferably, 0.75 % to 0.85 %.

### Si: 0.1 % to 1.5 %

Si is an element that has an effect as a deoxidizer. Further, Si has an effect of improving the 0.2 % proof stress of a rail by solid solution strengthening of ferrite in pearlite. Therefore, the Si content needs to be 0.1 % or more. On the other hand, a Si content beyond 1.5 % produces a large amount of oxide-based inclusions because Si has a high strength of bonding with oxygen, thus deteriorating rolling contact fatigue resistance. Therefore, the Si content is set to 0.1 % to 1.5 %, and preferably, 0.15 % to 1.5 %.

### Mn: 0.4 % to 1.5 %

Mn is an element that improves the strength of a rail by decreasing the transformation temperature of steel to thereby shorten the lamellar spacing. A Mn content less than 0.4 %, however, cannot achieve a sufficient effect. On the other hand, a Mn content beyond 1.5 % tends to generate a martensite structure by micro segregation of steel, thus deteriorating rolling contact fatigue resistance. Therefore, the Mn content is set to 0.4 % to 1.5 %, and preferably, 0.4 % to 1.4 %.

### P: 0.035 % or less

A P content beyond 0.035 % deteriorates ductility of a rail. Therefore, the P content is set to 0.035 % or less. On the other hand, the lower limit of the P content is not limited, and may be 0%, although industrially more than 0 %. Excessively decreasing the P content causes an increase in refining cost. Thus, from the perspective of economic efficiency, the P content is preferably set to 0.001 % or more. More preferably, the P content is 0.025 % or less.

### S: 0.010 % or less

S exists in steel mainly in the form of an A type (sulfide-based) inclusion. A S content beyond 0.010 % significantly increases the amount of the inclusions and generates coarse inclusions, thus deteriorating rolling contact fatigue resistance. Setting the S content to less than 0.0005 % causes an increase in refining cost. Thus, from the perspective of economic efficiency, the S content is preferably set to 0.0005 % or more. More preferably, the S content is 0.009 % or less.

### Cr: 0.05 % to 1.50 %

Cr is an element that has an effect of improving the 0.2 % proof stress by solid solution strengthening of cementite in pearlite. To achieve this effect, the Cr content needs to be 0.05 % or more. On the other hand, a Cr content beyond 1.50 % generates a martensite structure by solid solution strengthening of Cr, ending up deteriorating rolling contact fatigue resistance. Therefore, the Cr content is set to 0.05 % to 1.50 %, and preferably 0.10 % to 1.50 %.

Our rail comprises the aforementioned composition as a steel raw material, with the balance being Fe and inevitable impurities. The balance is Fe and inevitable impurities, and may further contain the following elements within a range which does not substantially affect the action and effect of the invention.

Specifically, the balance may further contain as necessary at least one selected from the group consisting of
V: 0.30 % or less,
Cu: 1.0 % or less,
Ni: 1.0 % or less,
Nb: 0.05 % or less,
Mo: 0.5 % or less,
Al: 0.07 % or less,
W: 1.0 % or less,
B: 0.005 % or less, and
Ti: 0.05 % or less.

### V: 0.30 % or less

V is an element that has an effect of precipitating as a carbonitride during and after rolling and improving the 0.2 % proof stress by precipitation strengthening. Therefore, 0.001 % or more of V is preferably added. On the other hand, a V content beyond 0.30 % causes the precipitation of a large amount of coarse carbonitrides, thus deteriorating rolling contact fatigue resistance. Therefore, in the case of adding V, the V content is preferably set to 0.30 % or less.

### Cu: 1.0 % or less

As with Cr, Cu is an element that has an effect of improving the 0.2 % proof stress by solid solution strengthening. Therefore, 0.001 % or more of Cu is preferably added. On the other hand, a Cu content beyond 1.0 % causes Cu cracking. Therefore, in the case of adding Cu, the Cu content is preferably set to 1.0 % or less.

### Ni: 1.0 % or less

Ni has an effect of improving the 0.2 % proof stress without deteriorating ductility. Therefore, 0.001 % or more of Ni is preferably added. In addition, adding Ni along with Cu can prevent Cu cracking. Thus, in the case of adding Cu, Ni is preferably added. On the other hand, a Ni content beyond 1.0 % increases quench hardenability to produce martensite, deteriorating rolling contact fatigue resistance. Therefore, in the case of adding Ni, the Ni content is preferably set to 1.0 % or less.

### Nb: 0.05 % or less

Nb precipitates as a carbonitride during and after rolling and improves the 0.2 % proof stress of a pearlitic rail. Therefore, 0.001 % or more of Nb is preferably added. On the other hand, a Nb content beyond 0.05 % causes the precipitation of a large amount of coarse carbonitrides, thus deteriorating ductility. Therefore, in the case of adding Nb, the Nb content is preferably set to 0.05 % or less.

### Mo: 0.5 % or less

Mo precipitates as a carbonitride during and after rolling and improves the 0.2 % proof stress by precipitation strengthening. Therefore, 0.001 % or more of Mo is preferably added. On the other hand, a Mg content beyond 0.5 % produces martensite, thus deteriorating rolling contact fatigue resistance. Therefore, in the case of adding Mo, the Mo content is preferably set to 0.5 % or less.

### Al: 0.07 % or less

Al is an element that is added as a deoxidizer. Therefore, 0.001 % or more of Al is preferably added. On the other hand, an Al content beyond 0.07 % produces a large amount of oxide-based inclusions because Al has a high strength of bonding with oxygen, thus deteriorating rolling contact fatigue resistance. Therefore, the Al content is preferably set to 0.07 % or less.

### W: 1.0 % or less

W precipitates as a carbonitride during and after rolling and improves the 0.2 % proof stress by precipitation strengthening. Therefore, 0.001 % or more of W is preferably added. On the other hand, a W content beyond 1.0 % produces martensite, thus deteriorating rolling contact fatigue resistance. Therefore, in the case of adding W, the W content is preferably set to 1.0 % or less.

### B: 0.005 % or less

B precipitates as a nitride during and after rolling, and improves the 0.2 % proof stress by precipitation strengthening. Therefore, 0.0001 % or more of B is preferably added. A B content beyond 0.005 % produces martensite, thus deteriorating rolling contact fatigue resistance. Therefore, in the case of adding B, the B content is preferably set to 0.005 % or less.

### Ti: 0.05 % or less

Ti precipitates as a carbide, a nitride, or a carbonitride during and after rolling, and improves the 0.2 % proof stress by precipitation strengthening. Therefore, 0.001 % or more of Ti is preferably added. On the other hand, a Ti content beyond 0.05 % produces coarse carbides, nitrides, or carbonitrides, thus deteriorating rolling contact fatigue resistance. Therefore, in the case of adding Ti, the Ti content is preferably 0.05 % or less.

### [Improvement margin of a 0.2 % proof stress of 40 MPa or more]

In the invention, it is important that the rail has the aforementioned chemical composition, and additionally exhibits, at least 90 days after a preparation date of a steel material inspection certificate of the rail which describes at least a measurement result of a 0.2 % proof stress of a head of the rail, an improvement margin of a 0.2 % proof stress of 40 MPa or more, relative to the 0.2 % proof stress described in the steel material inspection certificate.

Specifically, to improve rolling contact fatigue resistance of the rail, the 0.2 % proof stress of the rail needs to be improved to limit a plastic deformation area as much as possible. The 0.2 % proof stress can be improved by adding alloying elements, which, however, rather deteriorates rolling contact fatigue resistance of the rail by the generation of an abnormal structure such as martensite. To prevent the generation of an abnormal structure and improve the 0.2 % proof stress, straightening treatment and aging treatment under the aforementioned conditions are effective. The 0.2 % proof stress at least after the passage of 90 days can be improved by straightening treatment under optimal loads and natural aging for an optimal period

When the improvement margin of a 0.2 % proof stress is as small as less than 40 MPa, a plastic flow is easily caused on a surface of the rail, and fatigue layers easily accumulate on a surface of the rail, decreasing the improvement margin of rolling contact fatigue resistance. Therefore, the improvement margin of a 0.2 % proof stress is set to 40 MPa or more. As used herein, the "improvement margin of a 0.2 % proof stress" can be determined as a difference between a 0.2 % proof stress of the rail at a preparation date of a "steel material inspection certificate" after production of the rail, specifically, almost at the time of shipping (hereinafter, referred to as before-aging rail) and a 0.2 % proof stress obtained by performing a tensile test on test pieces collected from the rail at least 90 days after the preparation date (hereinafter, referred to as aged rail) (a 0.2 % proof stress of the aged rail - a 0.2 % proof stress of the before-aging rail).

The improvement margin of a 0.2 % proof stress at least after the passage of 90 days is used to evaluate a 0.2 % proof stress of the rail which has sufficiently exhibited strain aging, in which C is stuck to strains introduced into the rail in rail straightening, thus improving the 0.2 % proof stress.

The steel material inspection certificate describes a result of testing mechanical properties on the rail obtained through a final process of producing the rail. The rail is shipped to a customer attached with the steel material inspection certificate. The rail of the invention is attached with the steel material inspection certificate, which describes at least a measurement result of a 0.2 % proof stress of a head of the rail. The described measurement result of a 0.2 % proof stress is a value obtained in a tensile test on samples collected from a head of the rail. Further, at least 90 days after a preparation date of the steel material inspection certificate, the 0.2 % proof stress is improved by 40 MPa or more, relative to the 0.2 % proof stress described in the steel material inspection certificate. Thus, considering that there are typically 90 days or more from the shipping of the rail to the rail laying, the rail obtains more improved rolling contact fatigue resistance than expected from the 0.2 % proof stress described in the steel material inspection certificate. Even if the time from a preparation date of the steel material inspection certificate to the rail laying is less than 90 days, the rail typically has a service life substantially longer than 90 days. Thus, during use of the rail, 90 days pass from the preparation date of the steel material inspection certificate before rolling contact fatigue occurs in the rail, and thus the 0.2 % proof stress is increased, improving rolling contact fatigue resistance.

The improvement margin of a 0.2 % proof stress is measured at least 90 days after a preparation date of the steel material inspection certificate and does not need to be measured in 90 days from a preparation date. In other words, the improvement margin of a 0.2 % proof stress may be measured in 90 days from a preparation date, or 1 year or more after a preparation date of the steel material inspection certificate.

The improvement of a 0.2 % proof stress of 40 MPa or more may be considered as a safety margin for a predicted value of the rail service life. Alternatively, 40 MPa is further added to a 0.2 % proof stress described in the steel material inspection certificate and the obtained value may be used to predict the rail service life.

### [Producing Conditions]

Next, a method for producing our rail will be described.

Our rail can be produced by making a rail through hot rolling and cooling according to a usual method and subsequently subjecting the rail to straightening treatment with loads of 980665 N (100 tf) or more.

The rail is produced by hot rolling, for example, in accordance with the following procedures.

First, steel is melted in a converter or an electric heating furnace and subjected as necessary to secondary refining such as degassing. Subsequently, the chemical composition of the steel is adjusted within the aforementioned range. Next, the steel is subjected to continuous casting to make a steel raw material such as bloom. Subsequently, the steel raw material is heated in a heating furnace to 1200 °C to 1350 °C and hot rolled to obtain a rail. The hot rolling is preferably performed at rolling finish temperature: 850 °C to 1000 °C and the rail after the hot rolling is preferably cooled at cooling rate: 1 °C/s to 10 °C/s.

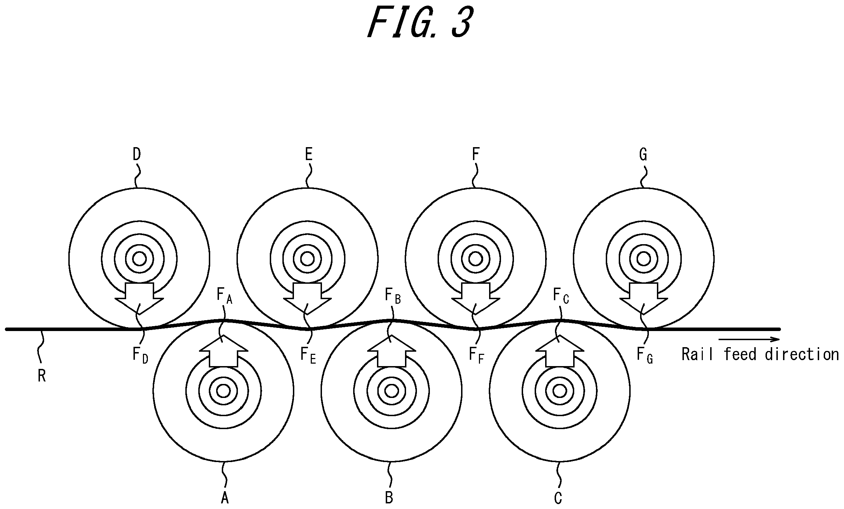

After the cooling following the hot rolling is finished, the rail is subjected to straightening treatment with loads of 980665 N (100 tf) or more to straighten a bend of the rail. The bend of the rail is straightened by passing the rail through straightening rollers disposed in zigzag along the feed direction of the rail and subjecting the rail to repeated bending/bend restoration deformation. FIG. 3 is a conceptual diagram illustrating a method for straightening a bend of the rail. The bend straightening of a rail is performed by passing a rail R through straightening rollers A to G disposed in zigzag along the feed direction of the rail. In FIG. 3, top surfaces of straightening rollers A, B, and C disposed below the feed line are arranged at an upper side than bottom surfaces of straightening rollers D, E, F, and G disposed above the feed line. By passing the rail through the straightening roller group, the rail is subjected to bending/bend restoration deformation. During the straightening, at least one of straightening loads applied to the straightening rollers A to G is 980665 N (100 tf) or more. For example, in the example of FIG. 3, seven straightening rollers in total, that is, three straightening rollers in the lower side of the figure and four straightening rollers in the upper side of the figure are applied with straightening loads of F_{A}, F_{B}, F_{C}, F_{D}, F_{E}, F_{F}, and F_{G}, among which, the largest straightening load is 980665 N (100 tf) or more. By setting the straightening load to 980665 N (100 tf) or more, strains can be introduced into the rail so that the improvement margin of a 0.2 % proof stress may be 40 MPa after the passage of 90 days. The straightening load is preferably 1029698 N or more and 1667131 N or less (105 tf or more and 170 tf or less).

Strains accumulated in the rail by straightening treatment is changed depending on the straightening load and the cross-sectional area of the rail (size of the rail) to be subjected to the straightening treatment. Here, the rail to be used under high axle load conditions which is targeted in the invention has a size of 115 lbs (52.2 kg), 136 lbs (61.7 kg),141 lbs (64.0 kg) in the North America AREMA Standard which has a relatively large cross-section, and a size of 50 kgN and 60 kg in the JIS Standard. When the rail having such a size is applied with a straightening load of 100 tf or more, enough strains can be accumulated in the rail to produce a sufficient improvement margin of a 0.2 % proof stress relative a 0.2 % proof stress measured within 480 hours after the straightening.

Within 480 hours after the bend straightening of the rail is performed, a steel material inspection certificate is prepared which includes at least the measurement result of a 0.2 % proof stress of a head of the rail. When material properties of the rail including a 0.2 % proof stress are inspected after a long period of time which causes strain aging has passed after the bend straightening of the rail, the 0.2 % proof stress is found to have been increased relative to that inspected immediately after the straightening. Thus, the rail can be shipped as a rail having a high 0.2 % proof stress. However, storing the rail in factories for a long period of time after the straightening treatment is impossible because of limitation of the extent of a repository. Therefore, the steel material inspection certificate which describes at least the measurement result of a 0.2 % proof stress of a head of the rail is prepared immediately after the bend straightening, that is, within 480 hours after the bend straightening.

A rail made from a steel raw material having the aforementioned chemical composition exhibits an improvement margin of a 0.2 % proof stress of 40 MPa or more at least 90 days after a preparation date of the steel material inspection certificate by virtue of natural aging for at least 90 days after the straightening treatment.

### EXMAMPLES

### (Example 1)

Steel raw materials (bloom) having a chemical composition listed in Table 1 were hot rolled to obtain rails having a size listed in Table 2. At that time, the heating temperature before the hot rolling was 1250 °C, and the delivery temperature was 900 °C. The hot-rolled rails were cooled to 400 °C at an average cooling rate of 3 °C/s. Subsequently, the cooled rails were subjected to straightening treatment under conditions listed in Table 2.

A tensile test was performed on the obtained rails to measure their 0.2 % proof stress, tensile strength, and elongation. Further, a rolling contact fatigue resistance test was performed to measure rolling contact fatigue resistance of the rails. Table 2 also lists these results. The measurement method was as follows. The tensile test was performed between the straightening treatment and the preparation of a steel material inspection certificate. Additionally, the tensile test was also performed in the rails other than No. 1 after natural aging treatment.

### [Tensile test]

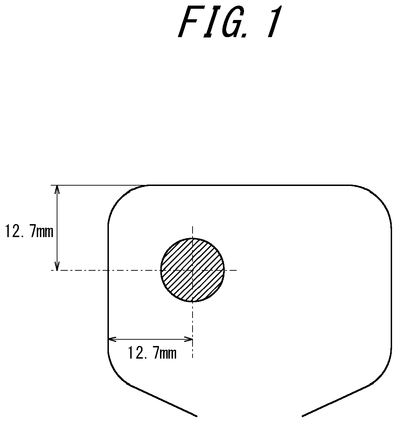

For heads of the obtained rails, tensile test pieces were collected from the portion illustrated in FIG. 1. Specifically, tensile test pieces having a diameter of parallel portion as described in ASTM A370 of 12.7 mm were collected from a position described in 2.1.3.4 of Chapter 4 of AREMA (see FIG. 1). Next, using the obtained tensile test pieces, a tensile test was performed under conditions of a tension speed of 1 mm/min and a gauge length of 50 mm to measure 0.2 % proof stress, tensile strength, and elongation. The measurement results were listed in Table 2.

The tensile test was performed within 480 hours after the straightening treatment on test pieces of heads of the rails collected from immediately after (within 480 hours after) the straightening treatment. As to the rails other than No. 1, the tensile test was also performed 90 days after the preparation of a steel material inspection certificate. Further, test pieces were collected from heads of the rails after the rails had gone through natural aging treatment for a natural aging treatment period as listed in Table 2. On the test pieces, a tensile test was performed after time (days) from the preparation of a steel material inspection certificate to the tensile test as listed in Table 2 had passed. Then, the improvement margin (MPa) of a 0.2 % proof stress after natural aging treatment was measured, relative to the 0.2 % proof stress measured in the tensile test immediately after the straightening treatment.

### [Rolling contact fatigue resistance]

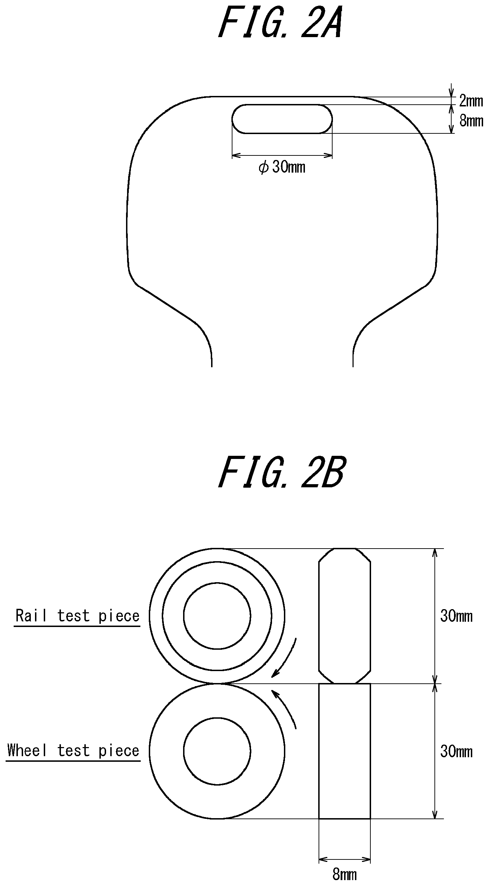

Rolling contact fatigue resistance was evaluated using a Nishihara type wear test apparatus and simulating actual contact conditions between a rail and a wheel. Specifically, cylinder test pieces having a diameter of 30 mm (an outer diameter of 30 mm and an inner diameter of 16 mm) with a contact surface being a curved surface having a radius of curvature of 15 mm were collected from heads of the rails after natural aging treatment as illustrated in FIG. 2A. The cylinder test pieces were fed to the test apparatus as illustrated in FIG. 2B with a contact pressure of 2.2 GPa and a slip rate of -20 % under oil lubrication conditions. At the time when spalling occurred in a contact surface of the test pieces, the test pieces were determined to have reached their rolling contact fatigue life. As a standard when comparing the rolling contact fatigue life, an actually-used pearlite steel rail having the C content of 0.81 % was adopted. When the rolling contact fatigue time was 10 % or more longer than in the actually-used pearlite steel rail (A1), the rolling contact fatigue resistance was determined to have been improved.

The wheel material illustrated in FIGS. 2A and 2B was subjected to the test, the wheel material being obtained by heating a round bar with a diameter of 33 mm to 900 °C, the bar having a chemical composition containing, in mass%, 0.76 % C, 0.35 % Si, 0.85 % Mn, 0.017 % P, 0.008 % S, and 0.25 % Cr with the balance being Fe and inevitable impurities, holding the bar for 40 minutes, subsequently allowing it to be naturally cooled, and forming it into a wheel material as illustrated in FIG. 2B. The hardness of the wheel material was HV280.

**Table 1**

| Steel sample ID | Chemical composition (mass%)* | | | | | | Remarks |
|---|---|---|---|---|---|---|---|
| | C | Si | Mn | P | S | Cr | |
| A1 | 0.81 | 0.25 | 1.18 | 0.009 | 0.005 | 0.25 | Conforming Steel |
| A2 | 0.84 | 0.51 | 0.62 | 0.011 | 0.004 | 0.77 | Conforming Steel |
| A3 | 0.69 | 0.24 | 0.82 | 0.008 | 0.007 | 0.15 | Comparative Steel |

| | | | | | | | |
|---|---|---|---|---|---|---|---|
| *The balance is Fe and inevitable impurities | | | | | | | |

**Table 2**

| No. | Steel sample ID | Size | Straightening load (N(tf)) | Measurement results | | | | | | | | | | | | | Remarks |
|---|---|---|---|---|---|---|---|---|---|---|---|---|---|---|---|---|---|
| | | | | Time from straightening treatment to preparation of steel material inspection certificate (h) | After straightening (described in steel material inspection certificate) | | | After aging treatment 1 ^{∗1} | | After aging treatment 2 ^{∗2} | | | | | | Improvement margin of rolling contact fatigue resistance (%) | |
| | | | | | 0.2 % proof stress (Mpa) | Tensile strength (MPa) | Elongation (%) | 0.2 % proof stress (Mpa) | Improvement margin of 0.2 % proof stress (MPa) | Treatment period of natural aging (days) | Time from preparation date of steel material inspection certificate to tensile test (days) | 0.2 % proof stress (Mpa) | Tensile strength (MPa) | Elongation (%) | Improvement margin of 0.2 % proof stress (MPa) | | |
| 1 | A1 | 1361bs | 980665 ( 100) | 24 | 920 | 1404 | 120 | - | - | - | - | - | - | - | - | Standard | Comparative Example |
| 2 | A2 | 1411bs | 931632 ( 95) | 24 | 932 | 1432 | 12.1 | 935 | 1 | 90.8 | 92.0 | 935 | 1445 | 12.2 | 3 | 2 | Comparative Example |
| 3 | A2 | 1411bs | 1470998( 150) | 24 | 934 | 1432 | 12.5 | 985 | 51 | 118.8 | 1200 | 981 | 1451 | 12.5 | 47 | 14 | Example |
| 4 | A2 | 50kgN | 1470998(150) | 30 | 931 | 1433 | 12.3 | 973 | 42 | 90.5 | 92.0 | 972 | 1421 | 14.7 | 41 | 16 | Example |
| 5 | A2 | 1361bs | 1470998(150) | 30 | 931 | 1440 | 12.5 | 977 | 46 | 98.5 | 100.0 | 979 | 1307 | 15.2 | 48 | 19 | Example |
| 6 | A2 | 1411bs | 1372931( 140) | 30 | 933 | 1439 | 12.6 | 974 | 41 | 93.5 | 95.0 | 974 | 1288 | 15.6 | 41 | 17 | Example |
| 7 | A2 | 1361bs | 1372931( 140) | 24 | 934 | 1432 | 12.5 | 985 | 51 | 148.8 | 150.0 | 993 | 1439 | 126 | 59 | 26 | Example |
| 8 | A2 | 1361bs | 1176798(120) | 48 | 931 | 1433 | 12.7 | 980 | 49 | 117.6 | 120.0 | 988 | 1434 | 12.7 | 57 | 22 | Example |
| 9 | A2 | 50kgN | 1176798(120) | 48 | 931 | 1433 | 12.8 | 978 | 47 | 137.6 | 140.0 | 988 | 1422 | 126 | 57 | 24 | Example |
| 10 | A2 | 136lbs | 1765197( 180) | 40 | 932 | 1433 | 12.5 | 982 | 50 | 118.0 | 120.0 | 984 | 1435 | 12.5 | 52 | 18 | Example |
| 11 | A3 | 141lbs | 1372931( 140) | 40 | 892 | 1387 | 12.7 | 910 | 18 | 118.0 | 1200 | 911 | 1453 | 12.1 | 19 | 5 | Comparative Example |
| 12 | A3 | 136lbs | 1372931( 140) | 40 | 888 | 1389 | 12.8 | 922 | 34 | 118.0 | 1200 | 922 | 1399 | 12.8 | 34 | 2 | Comparative Example |
| 13 | A2 | 136lbs | 1176798(120) | 480 | 935 | 1428 | 12.5 | 981 | 46 | 118.0 | 1200 | 983 | 1441 | 12.5 | 48 | 15 | Example |
| 14 | A2 | 136lbs | 1176798(120) | 240 | 930 | 1428 | 12.8 | 975 | 45 | 118.0 | 1200 | 980 | 1430 | 13.0 | 50 | 16 | Example |
| 15 | A2 | 141lbs | 980665 ( 100) | 480 | 925 | 1430 | 12.5 | 974 | 49 | 118.0 | 1200 | 975 | 1422 | 13.1 | 50 | 13 | Example |
| 16 | A2 | 50kgN | 931632 ( 95) | 48 | 925 | 1430 | 12.8 | 926 | 1 | 90.8 | 92.0 | 925 | 1431 | 12.8 | 0 | 2 | Comparative Example |

| | | | | | | | | | | | | | | | | | |
|---|---|---|---|---|---|---|---|---|---|---|---|---|---|---|---|---|---|
| *1 After the preparation of a steel material inspection certificate, natural aging is done for 90 days, and then a tensile test is performed. *2 After the preparation of a steel matetrial inspection certificate, natural aging is done for a treatment period of natural aging listed in Table 2, and than a tensile test is performed. | | | | | | | | | | | | | | | | | |

The rail of Comparative Example No. 1 in Example 1 was an actually-used pearlitic rail having the C content of 0.81 %. As seen from the results listed in Table 2, rails of Examples according to the invention had a more excellent 0.2 % proof stress than the rail of Comparative Example No. 1 by 40 MPa or more and exhibited an improvement margin of rolling contact fatigue resistance of 10 % or more. On the other hand, the rails of Comparative Examples which did not satisfy the conditions of the invention were inferior in at least one of a 0.2 % proof stress, elongation, and rolling contact fatigue resistance.

### (Example 2)

Rails were made in the same procedures as in Example 1 other than using steel having a chemical composition listed in Table 3. A tensile test and measurement of rolling contact fatigue resistance were performed on the rails in the same way as in Example 1. Table 4 lists conditions of straightening treatment and aging treatment, and measurement results.

As seen from the results listed in Table 4, the rails of Examples satisfying the conditions of the invention had a more excellent 0.2 % proof stress than the rail of Comparative Example No. 1 by 40 MPa or more and exhibited an improvement margin of rolling contact fatigue resistance of 10 % or more. On the other hand, the rails of Comparative Examples which did not satisfy the conditions of the invention were inferior in at least one of a 0.2 % proof stress and rolling contact fatigue resistance.

**Table 3**

| Steel sample ID | Chemical Composition (mass%)* | | | | | | | | | | | | | | | Remarks |
|---|---|---|---|---|---|---|---|---|---|---|---|---|---|---|---|---|
| | C | Si | Mn | P | S | Cr | Cu | Ni | Mo | V | Nb | Al | W | B | Ti | |
| A1 | 0.81 | 0.25 | 1.17 | 0.011 | 0.006 | 0.25 | - | - | - | - | - | - | - | - | - | Conforming Steel |
| B1 | 0.83 | 1.50 | 0.48 | 0.014 | 0.007 | 0.26 | - | - | - | - | - | - | - | - | - | Conforming Steel |
| B2 | 0.83 | 0.25 | 0.85 | 0.005 | 0.007 | 0.61 | - | - | - | - | - | - | - | - | - | Conforming Steel |
| B3 | 0.70 | 0.42 | 0.40 | 0.003 | 0.006 | 1.50 | - | - | - | - | - | - | - | - | - | Conforming Steel |
| B4 | 0.84 | 0.88 | 0.46 | 0.016 | 0.005 | 0.79 | - | - | - | - | - | - | - | - | - | Conforming Steel |
| B5 | 0.83 | 0.87 | 0.47 | 0.003 | 0.006 | 1.46 | - | - | - | - | - | - | - | - | - | Conforming Steel |
| B6 | 0.84 | 0.22 | 1.20 | 0.005 | 0.007 | 0.21 | - | - | - | - | - | - | - | - | - | Conforming Steel |
| B7 | 0.81 | 0.69 | 0.56 | 0.015 | 0.007 | 0.79 | - | - | - | - | - | - | - | - | - | Conforming Steel |
| B8 | 0.71 | 1.16 | 1.34 | 0.016 | 0.004 | 0.88 | - | - | - | - | - | - | - | - | - | Conforming Steel |
| B9 | 0.84 | 1.06 | 0.83 | 0.019 | 0.006 | 0.05 | - | - | - | - | - | - | - | - | - | Conforming Steel |
| B10 | 0.85 | 0.48 | 0.71 | 0.016 | 0.004 | 0.32 | - | - | - | - | - | - | - | - | - | Conforming Steel |
| B11 | 0.68 | 0.25 | 0.81 | 0.015 | 0.006 | 0.05 | - | - | - | - | - | - | - | - | - | Comparative Steel |
| B12 | 0.86 | 0.24 | 0.81 | 0.015 | 0.007 | 0.22 | - | - | - | - | - | - | - | - | - | Comparative Steel |
| B13 | 0.72 | 0.04 | 0.81 | 0.015 | 0.005 | 0.21 | - | - | - | - | - | - | - | - | - | Comparative Steel |
| B14 | 0.82 | 1.55 | 0.82 | 0.014 | 0.005 | 0.99 | - | - | - | - | - | - | - | - | - | Comparative Steel |
| B15 | 0.72 | 0.25 | 0.34 | 0.015 | 0.005 | 0.18 | - | - | - | - | - | - | - | - | - | Comparative Steel |
| B16 | 0.84 | 0.29 | 1.55 | 0.011 | 0.005 | 0.99 | - | - | - | - | - | - | - | - | - | Comparative Steel |
| B17 | 0.81 | 0.63 | 0.81 | 0.006 | 0.003 | 0.01 | - | - | - | - | - | - | - | - | - | Comparative Steel |
| B18 | 0.85 | 0.59 | 0.81 | 0.007 | 0.003 | 1.55 | - | - | - | - | - | - | - | - | - | Comparative Steel |
| B19 | 0.84 | 0.55 | 0.55 | 0.014 | 0.005 | 0.79 | - | - | - | 0.05 | - | - | - | - | - | Conforming Steel |
| B20 | 0.84 | 0.51 | 0.61 | 0.008 | 0.004 | 0.74 | - | - | - | 0.15 | - | - | - | - | - | Conforming Steel |
| B21 | 0.84 | 0.25 | 1.10 | 0.006 | 0.005 | 0.25 | - | - | - | - | 0.04 | - | - | - | - | Conforming Steel |
| B22 | 0.84 | 0.35 | 1.05 | 0.003 | 0.004 | 0.29 | - | - | 0.30 | - | - | - | - | - | - | Conforming Steel |
| B23 | 0.84 | 0.55 | 0.55 | 0.011 | 0.005 | 0.62 | 0.30 | 0.50 | - | - | - | - | - | - | - | Conforming Steel |
| B24 | 0.84 | 0.25 | 1.20 | 0.004 | 0.005 | 0.29 | - | - | - | - | - | 0.07 | 0.60 | - | - | Conforming Steel |
| B25 | 0.84 | 0.88 | 0.55 | 0.005 | 0.005 | 0.45 | - | - | - | - | - | - | - | 0.003 | 0.05 | Conforming Steel |
| B26 | 0.84 | 0.95 | 0.56 | 0.011 | 0.005 | 0.79 | - | - | - | 0.05 | - | - | - | - | - | Conforming Steel |

| | | | | | | | | | | | | | | | | |
|---|---|---|---|---|---|---|---|---|---|---|---|---|---|---|---|---|
| *The balance is Fe and inevitable impurities | | | | | | | | | | | | | | | | |

**Table 4**

| No. | Steel sample ID | Size | Straightening load (N(tf)) | Measurement results | | | | | | | | | | | | | Remarks |
|---|---|---|---|---|---|---|---|---|---|---|---|---|---|---|---|---|---|
| | | | | Time from straightening treatment to preparation of steel material inspection certificate (h) | After straightening (described in steel material inspection certificate) | | | After aging treatment 1 ^{∗1} | | After aging treatment 2 ^{∗2} | | | | | Improvement margin of 0.2 °o proof stress (MPa) | Improvement margin of rolling contact fatigue resistance (%) | |
| | | | | | 0.2 % proof stress (Mpa) | Tensile strength (MPa) | Elongation (%) | 0.2 % proof stress (Mpa) | Improvement margin of 0.2 % proof stress (MPa) | Treatment period of natural aging (days) | Time from a preparation date of steel material inspection certificate to tensile test (days) | 0.2 % proof stress (Mpa) | Tensile strength (MPa) | Elongation (%) | | | |
| 17 | A1 | 50kgN | - | 24 | 920 | 1404 | 120 | - | - | - | - | - | - | - | - | Standard | Comparative Example |
| 18 | B1 | 136lbs | 1176798( 120) | 24 | 933 | 1442 | 122 | 975 | 42 | 118.8 | 1200 | 974 | 1435 | 12.4 | 41 | 11 | Example |
| 19 | B2 | 141lbs | 1372931( 140) | 24 | 929 | 1431 | 122 | 969 | 40 | 90.8 | 920 | 969 | 1438 | 123 | 40 | 13 | Example |
| 20 | B3 | 141lbs | 1470998( 150) | 30 | 887 | 1387 | 13.1 | 928 | 41 | 93.5 | 95.0 | 928 | 1389 | 129 | 41 | 11 | Example |
| 21 | B4 | 136lbs | 1470998( 150) | 35 | 933 | 1433 | 12.8 | 981 | 48 | 118.3 | 120.0 | 982 | 1432 | 12.7 | 49 | 14 | Example |
| 22 | B5 | 141lbs | 1372931( 140) | 48 | 952 | 1441 | 123 | 993 | 41 | 117.6 | 120.0 | 995 | 1442 | 123 | 43 | 13 | Example |
| 23 | B6 | 1361bs | 1372931( 140) | 24 | 918 | 1398 | 11.7 | 959 | 41 | 148.8 | 150.0 | 960 | 1423 | 11.1 | 42 | 13 | Example |
| 24 | B7 | 136lbs | 1274865(130) | 35 | 929 | 1422 | 12.5 | 972 | 43 | 148.3 | 150.0 | 974 | 1429 | 122 | 45 | 14 | Example |
| 25 | B8 | 141lbs | 1323898(135) | 35 | 929 | 1423 | 126 | 970 | 41 | 118.3 | 120.0 | 971 | 1423 | 12.4 | 42 | 15 | Example |
| 26 | B9 | 136lbs | 1372931( 140) | 35 | 934 | 1439 | 126 | 976 | 42 | 128.3 | 130.0 | 976 | 1438 | 12.5 | 42 | 12 | Example |
| 27 | B10 | 141lbs | 1470998( 150) | 30 | 929 | 1422 | 123 | 978 | 49 | 133.5 | 135.0 | 980 | 1430 | 12.4 | 51 | 16 | Example |
| 28 | B11 | 136lbs | 1274865(130) | 24 | 889 | 1377 | 12.4 | 921 | 12 | 98.8 | 100.0 | 921 | 1387 | 123 | 32 | 9 | Comparative Example |
| 29 | B12 | 136lbs | 1274865(130) | 24 | 948 | 1421 | 11.1 | 988 | 40 | 98.8 | 100.0 | 989 | 1420 | 10.7 | 41 | 9 | Comparative Example |
| 30 | B13 | 136lbs | 1274865(130) | 24 | 892 | 1387 | 122 | 931 | 39 | 98.8 | 100.0 | 931 | 1389 | 122 | 39 | 9 | Comparative Example |
| 31 | B14 | 141lbs | 1274865(130) | 24 | 944 | 1429 | 123 | 984 | 40 | 98.8 | 100.0 | 984 | 1430 | 123 | 40 | 9 | Comparative Example |
| 32 | B15 | 136lbs | 1274865(130) | 24 | 889 | 1387 | 123 | 919 | 30 | 118.8 | 120.0 | 920 | 1392 | 12.5 | 11 | 7 | Comparative Example |
| 33 | B16 | 141lbs | 1274865(130) | 24 | 921 | 1428 | 12.4 | 961 | 40 | 108.8 | 110.0 | 963 | 1429 | 12.4 | 42 | 8 | Comparative Example |
| 34 | B17 | 136lbs | 1274865(130) | 24 | 879 | 1399 | 122 | 915 | 36 | 108.8 | 110.0 | 917 | 1401 | 122 | 38 | 8 | Comparative Example |
| 35 | B18 | 136lbs | 1274865(130) | 24 | 922 | 1432 | 123 | 964 | 42 | 98.8 | 100.0 | 965 | 1433 | 12.3 | 43 | 7 | Comparative Example |
| 36 | B19 | 141lbs | 1961330(200) | 24 | 933 | 1433 | 12.4 | 980 | 47 | 148.8 | 150.0 | 984 | 1430 | 12.4 | 51 | 15 | Example |
| 37 | B20 | 141lbs | 1470998( 150) | 30 | 942 | 1439 | 12.5 | 986 | 44 | 148.5 | 150.0 | 988 | 1433 | 12.2 | 46 | 11 | Example |
| 38 | B21 | 136lbs | 1372931( 140) | 48 | 934 | 1433 | 12.1 | 982 | 48 | 137.6 | 140.0 | 983 | 1435 | 12.1 | 49 | 13 | Example |
| 39 | B22 | 136lbs | 1372931( 140) | 24 | 929 | 1438 | 120 | 971 | 42 | 138.8 | 140.0 | 972 | 1439 | 12.4 | 43 | 11 | Example |
| 40 | B23 | 136lbs | 1274865(130) | 28 | 941 | 1432 | 123 | 984 | 43 | 138.6 | 140.0 | 985 | 1433 | 12.3 | 44 | 12 | Example |
| 41 | B24 | 141lbs | 1176798( 120) | 28 | 923 | 1430 | 122 | 967 | 44 | 128.6 | 130.0 | 968 | 1439 | 12.4 | 45 | 14 | Example |
| 42 | B25 | 50kgN | 980665 ( 100) | 29 | 923 | 1439 | 12.2 | 966 | 43 | 148.6 | 150.0 | 968 | 1440 | 12.5 | 45 | 14 | Example |
| 43 | B26 | 136lbs | 1372931( 140) | 28 | 931 | 1423 | 123 | 975 | 44 | 148.6 | 150.0 | 979 | 1433 | 12.3 | 48 | 12 | Example |
| 44 | B25 | 141lbs | 980665 ( 100) | 120 | 940 | 1424 | 12.5 | 980 | 40 | 145.0 | 150.0 | 981 | 1435 | 12.5 | 41 | 12 | Example |
| 45 | B26 | 136lbs | 1372931( 140) | 240 | 938 | 1430 | 13.0 | 983 | 45 | 138.8 | 150.0 | 985 | 1440 | 12.2 | 47 | 13 | Example |
| 46 | B26 | 141lbs | 980665 ( 100) | 480 | 935 | 1430 | 12.8 | 985 | 50 | 140 | 150.0 | 989 | 1442 | 12.5 | 54 | 13 | Example |
| 47 | B26 | 50kgN | 980665 ( 100) | 480 | 943 | 1451 | 12.2 | 998 | 55 | 140 | 150.0 | 999 | 1472 | 12.2 | 56 | 15 | Example |

| | | | | | | | | | | | | | | | | | |
|---|---|---|---|---|---|---|---|---|---|---|---|---|---|---|---|---|---|
| *1 After the preparation of a steel material inspection certificate, natural aging is done for 90 days, and then a tensile test is performed. *2 After the preparation of a steel matetrial inspection certificate, natural aging is done for a treatment period of natural aging listed in Table 2, and then a tensile test is performed. | | | | | | | | | | | | | | | | | |

## Claims

1. A rail accompanied by a steel material inspection certificate which describes at least a measurement result of a 0.2 % proof stress of a head of the rail measured within 480 hours after producing the rail, having a chemical composition containing, in mass%,
C: 0.70 % to 0.85 %,
Si: 0.1 % to 1.5 %,
Mn: 0.4 % to 1.5 %,
P: 0.035 % or less,
S: 0.010 % or less,
Cr: 0.05 % to 1.50 %,
optionally at least one selected from the group consisting of V: 0.30 % or less,
Cu: 1.0 % or less,
Ni: 1.0 % or less,
Nb: 0.05 % or less,
Mo: 0.5 % or less,
Al: 0.07 % or less,
W: 1.0 % or less,
B: 0.005 % or less, and
Ti: 0.05 % or less,
and with the balance being Fe and inevitable impurities,
wherein the rail exhibits, after at least 90 days of natural aging after the production, an improvement margin of a 0.2 % proof stress of 40 MPa or more, relative to the 0.2 % proof stress described in the steel material inspection certificate,
wherein the rail has a size of 115 lbs (52.2 kg), 136 lbs (61.7 kg), 141 lbs (64.0 kg) in the North American AREMA Standard, or a size of 50 kgN or 60 kg in the JIS Standard, wherein 0.2 % proof stress is measured utilizing the methods described in the description.

2. A method for producing a rail, comprising:
hot rolling a steel raw material to obtain a rail, the steel raw material having a chemical composition containing, in mass%,
C: 0.70 % to 0.85 %,
Si: 0.1 % to 1.5 %,
Mn: 0.4 % to 1.5 %,
P: 0.035 % or less,
S: 0.010 % or less,
Cr: 0.05 % to 1.50 %,
optionally at least one selected from the group consisting of V: 0.30 % or less,
Cu: 1.0 % or less,
Ni: 1.0 % or less,
Nb: 0.05 % or less,
Mo: 0.5 % or less,
Al: 0.07 % or less,
W: 1.0 % or less,
B: 0.005 % or less, and
Ti: 0.05 % or less,
and with the balance being Fe and inevitable impurities;
straightening the rail with at least one straightening roller, to which a load of 980665 N (100 tf) or more is applied; and
preparing a steel material inspection certificate including at least a measurement result of a 0.2 % proof stress of a head of the rail within 480 hours after the straightening,
wherein 0.2 % proof stress is measured utilizing the methods described in the description,
wherein the rail has a size of 115 lbs (52.2 kg), 136 lbs (61.7 kg), 141 lbs (64.0 kg) in the North American AREMA Standard, or a size of 50 kgN or 60 kg in the JIS Standard.

## Patentansprüche

1. Schiene, der ein Stahlwerkstoffprüfzeugnis beiliegt, das mindestens ein Messergebnis einer Dehngrenze von 0,2 % eines Schienenkopfes beschreibt, gemessen innerhalb von 480 Stunden nach Herstellung der Schiene, mit einer chemischen Zusammensetzung, die in Masse-% enthält:
C: 0,70 % bis 0,85 %,
Si: 0,1 % bis 1,5 %,
Mn: 0,4 % bis 1,5 %,
P: 0,035 % oder weniger,
S: 0,010 % oder weniger,
Cr: 0,05 % bis 1,50 %,
wahlweise mindestens eines ausgewählt aus der Gruppe bestehend aus V: 0,30 % oder weniger,
Cu: 1,0 % oder weniger,
Ni: 1,0 % oder weniger,
Nb: 0,05 % oder weniger,
Mo: 0,5 % oder weniger,
AI: 0,07 % oder weniger,
W: 1,0 % oder weniger,
B: 0,005 % oder weniger und
Ti: 0,05 % oder weniger,
und wobei der Rest Fe und unvermeidliche Verunreinigungen sind,
wobei die Schiene nach mindestens 90 Tagen natürlicher Alterung nach der Herstellung eine Verbesserungsspanne von 0,2 % Dehngrenze von 40 MPa oder
mehr aufweist, bezogen auf die 0,2 % Dehngrenze, die in dem Stahlmaterialprüfzertifikat beschrieben ist,
wobei die Schiene eine Masse pro Längeneinheit von 115 lbs (52,2 kg), 136 lbs (61,7 kg), 141 lbs (64,0 kg) nach dem nordamerikanischen AREMA-Standard oder eine Masse pro Längeneinheit von 50 kgN oder 60 kg nach dem JIS-Standard aufweist,
wobei 0,2 % Dehngrenze nach den in der Beschreibung beschriebenen Methoden gemessen wird.

2. Verfahren zur Herstellung einer Schiene, umfassend:
Warmwalzen eines Stahlrohstoffs, um eine Schiene zu erhalten, wobei das Stahlrohmaterial eine chemische Zusammensetzung aufweist, die in Masse-% enthält:
C: 0,70 % bis 0,85 %,
Si: 0,1 % bis 1,5 %,
Mn: 0,4 % bis 1,5 %,
P: 0,035 % oder weniger,
S: 0,010 % oder weniger,
Cr: 0,05 % bis 1,50 %,
wahlweise mindestens eines ausgewählt aus der Gruppe bestehend aus V: 0,30 % oder weniger,
Cu: 1,0 % oder weniger,
Ni: 1,0 % oder weniger,
Nb: 0,05 % oder weniger,
Mo: 0,5 % oder weniger,
AI: 0,07 % oder weniger,
W: 1,0 % oder weniger,
B: 0,005 % oder weniger und
Ti: 0,05 % oder weniger,
und wobei der Rest Fe und unvermeidliche Verunreinigungen sind,
Richten der Schiene mit mindestens einer Richtrolle, auf die eine Last von 980665 N (100 tf) oder mehr aufgebracht wird; und
Erstellen eines Stahlmaterialprüfzertifikats, das mindestens ein Messergebnis einer Dehngrenze von 0,2 % eines Schienenkopfes innerhalb von 480 Stunden nach dem Richten enthält,
wobei die 0,2 %-Dehngrenze unter Verwendung der in der Beschreibung beschriebenen Verfahren gemessen wird,
wobei die Schiene eine Masse pro Längeneinheit von 115 lbs (52,2 kg), 136 lbs (61,7 kg), 141 lbs (64,0 kg) nach dem nordamerikanischen AREMA-Standard oder eine Masse pro Längeneinheit von 50 kgN oder 60 kg nach dem JIS-Standard aufweist.

## Revendications

1. Rail accompagné d'un certificat d'inspection de matériaux en acier qui décrit au moins un résultat de mesure d'une limite d'élasticité à 0,2 % d'un champignon du rail mesurée dans les 480 heures après production du rail, ayant une composition chimique contenant, en % en masse,
C: 0,70 % à 0,85 %,
Si : 0,1 % à 1,5 %,
Mn : 0,4 % à 1,5 %,
P : 0,035 % ou moins,
S : 0,010 % ou moins,
Cr : 0,05 % à 1,50 %,
facultativement au moins un élément choisi dans le groupe constitué de V : 0,30 % ou moins,
Cu : 1,0 % ou moins,
Ni : 1,0 % ou moins,
Nb : 0,05 % ou moins,
Mo : 0,5 % ou moins,
Al : 0,07 % ou moins,
W : 1,0 % ou moins,
B : 0,005 % ou moins, et
Ti : 0,05 % ou moins,
et le reste étant Fe et des impuretés inévitables,
dans lequel le rail présente, après au moins 90 jours de vieillissement naturel après la production, une marge d'amélioration d'une limite d'élasticité à 0,2 % de 40 MPa ou plus, par rapport à la limite d'élasticité à 0,2 % décrite dans le certificat d'inspection de matériaux en acier,
dans lequel le rail a une taille de 115 livres (52,2 kg), 136 livres (61,7 kg), 141 livres (64,0 kg) dans la norme nord-américaine AREMA, ou une taille de 50 kgN ou 60 kg dans la norme JIS,
dans lequel la limite d'élasticité à 0,2 % est mesurée en utilisant les procédés décrits dans la description.

2. Procédé de production d'un rail, comprenant les étapes consistant à :
laminer à chaud une matière première en acier pour obtenir un rail, la matière première en acier ayant une composition chimique contenant, en % en masse,
C: 0,70 % à 0,85 %,
Si : 0,1 % à 1,5 %,
Mn : 0,4 % à 1,5 %,
P : 0,035 % ou moins,
S : 0,010 % ou moins,
Cr : 0,05 % à 1,50 %,
facultativement au moins un élément choisi dans le groupe constitué de V : 0,30 % ou moins,
Cu : 1,0 % ou moins,
Ni : 1,0 % ou moins,
Nb : 0,05 % ou moins,
Mo : 0,5 % ou moins,
Al : 0,07 % ou moins,
W : 1,0 % ou moins,
B : 0,005 % ou moins, et
Ti : 0,05 % ou moins,
et le reste étant Fe et des impuretés inévitables ;
redresser le rail avec au moins un rouleau redresseur, auquel une charge de 980 665 N (100 tf) ou plus est appliquée ; et
préparer un certificat d'inspection de matériaux en acier comprenant au moins un résultat de mesure d'une limite d'élasticité à 0,2 % d'un champignon du rail dans les 480 heures après le redressement,
dans lequel une limite d'élasticité à 0,2 % est mesurée en utilisant les procédés décrits dans la description,
dans lequel le rail a une taille de 115 livres (52,2 kg), 136 livres (61,7 kg), 141 livres (64,0 kg) dans la norme nord-américaine AREMA, ou une taille de 50 kgN ou 60 kg dans la norme JIS.
